# EUROPEAN PATENT SPECIFICATION

(11) **EP 4 463 246 B1**
(45) Date of publication and mention of the grant of the patent: **18.11.2026**
(21) Application number: 23700922.0
(22) Date of filing: 09.01.2023
(51) Int. Cl.: B01D 29/15, B01D 29/66, B01D 29/92

(54) **CANDLE FILTER ELEMENT**
KERZENFILTERELEMENT
ÉLÉMENT FILTRANT À BOUGIE

(30) Priority: 14.01.2022 US 202263299640 P
(43) Date of publication of application: 20.11.2024
(73) Proprietor: LENZING AKTIENGESELLSCHAFT, 4860 Lenzing (AT)
(72) Inventor: STRASSER, Stefan, 4881 Strass im Attergau (AT); WOEGERER, Juergen, 4863 Seewalchen am Attersee (AT); EISL, Georg, 5303 Thalgau (AT); AHAMER, Dominik, 4863 Seewalchen am Attersee (AT)
(74) Representative: Global Patent Management Lenzing AG
(86) International application number: PCT/EP2023/050323
(87) International publication number: WO 2023/135079

(56) References cited:
- WO-A2-00/16875
- DE-A1- 4 025 827
- US-A- 2 057 814
- US-A- 2 742 158
- US-A- 4 604 201

## Description

### FIELD OF THE INVENTION

The invention relates to a candle filter element for installation in a pressure vessel or for implementation in a tank or basin open to atmosphere. Main parts of the candle filter element are a fixing device for the connection to the housing, a coupling part to connect the support body with the fixing device, a support body for the filter material with integrated dip channel and a bottom part.

### BACKGROUND OF THE INVENTION:

The invention is used in the field of solid-liquid separation, more specifically in the cake filtration. Cake filtration is characterized by the fact that the particles from a suspension are deposited on the surface of a filter material, e.g. a filter cloth, and form a filter cake. Generally, the filter cloth is made of a non-woven or woven fabric or of a permeable membrane, all of those for the purposes of the present invention referred to in general as filter cloth.

The support body, as the main component of a candle filter element, serves to support the filter cloth and is already known from patent DE 3249756 C2. In this prior art, it is a perforated cylindrical body, which is vertically mounted inside the feed room of a pressure vessel. The filter cloth, which has the shape of a hose, is attached on the outside of the cylindrical body and is fastened to the same at the lower and upper end of the cylindrical body. The filter candle is closed at the bottom end and open at the top end. The open top end of the filter candle is attached to a perforated plate separating the feed- (suspension-) room against the room receiving the filtrate - referred to as the filtrate room - and thereby has an open connection to the filtrate room. This connection allows flow of the filtered fluid from the candle inside into the filtrate room after it has passed the filter cake and the filter cloth. During the procedure of backwash, flow is reversed and thereby filtered fluid flows from the filtrate chamber into the candle and passes the filter cloth in reversed / Inside-out - direction. The purpose of this process of reversing the flow is to remove the filter cake from the filter cloth and to remove particles from inside of pores in the porous filter cloth that would subsequently lead to blocking of the filter cloth and thereby would prevent flow over an extended period. Some process designs support the backwash by using pressurized gas to drive an increased amount of the filtered fluid or fluid-gas-mixtures through the filter cloth.

An important design parameter of such filtration systems is the filter area that can be accommodated in a filter system. Decrease of diameter of the filter candles as well as increasing the length of the filter candle both increase the filter area that can be accommodated in a filter vessel of a given diameter and thereby decrease the cost per filter area and subsequently the cost per fluid flow to be filtered. Filter candle lengths between 1 and 2.5 meter and filter candle diameters between 25 and 120 mm are state of the art.

One of the most important performance parameters is the backwash efficiency, meaning the ability of completely removing the filter cake from the filter cloth and particles trapped inside the pores of the filter cloth. The backwash efficiency rises proportional to the fluid flow throughout the total surface of the filter candle during backwash.

In this filter candle according to the prior art the fluid flow during backwash is limited by the ratio of length per diameter and by the pressure drop that occurs from the top of the filter candle where the filtered fluid enters the filter candle to the very bottom of the filter candle. Tests have demonstrated that with a filter candle having a diameter of 80 mm reasonable fluid flow to clean the filter candle with an aqueous liquid occurs only at the top 300 mm of the filter candle. The remaining length of the filter candle would not receive reasonably high filtrate flow to clean the filter cloth permanently. This leads to the need of frequent change of the filter cloth and thereby high operation cost for filter cloth and working time to change the same.

A means to improve this insufficient backwash is described in Patent US 4,604,201. It introduces a dip tube inside the filter candle that is going all the way to the bottom where it is open and therefore connected to the room inside the filter candle. The top side of this dip tube is connected to a filtrate header that forms the outlet of the filtered fluid from the filter candle. During backwash, the filtered fluid inside the filtrate header is reversed by applying compressed gas to the filtrate header. This compressed gas drives the fluid down the dip tube and up through the free space in the candle surrounding the dip tube and inside-out through the filter cloth. At the time when the fluid level reaches the lowest point of the dip tube, a very high flowrate is achieved due to the low-pressure resistance of the gas in the dip tube. This high flowrate together with the high turbulence achieved by the compressed gas introduced at the bottom of the filter candle element leads to a more successful backwash compared to prior state of the art.

The support body shown in this patent is made with longitudinal bars from individual profiles and the reinforcement is carried out with cross struts attaching them to the dip tube. The disadvantage of this design is that this support structure is limited by the numbers of longitudinal bars and its complexity in fabrication (e.g. fixing each single bar on the dip tube by welding or the like). However a sufficient support structure for the filter cloth is crucial for the lifetime of the filter cloth which will break if the distance between two longitudinal bars is too wide.

An improvement of the disadvantages from the system above is described in patent US 4,473,472. A bundle of perforated tubes is used as a support body for the filter cloth. However, there is a limit in the backwash efficiency with this design as well, driven by the pressure drop through the perforated tubes during the backwash. In this step filtrate flows again in reverse direction passing through the perforated tubes and then through the filter cloth. The pressure drop via the perforated tubes decreases the velocity of the filtrate flow and consequently through the filter cloth. However, for the best backwash result, as stipulated above, a high flow velocity is needed.

Another parameter ensuring an efficient backwash is to provide enough filtrate volume during the backwash. In prior art the backwash is a combination of filtrate flow and following gas flow. Some areas of the filter cloth are being cleaned by the filtrate and the rest is cleaned by the gas flow. This results in a different backwash efficiency over the length of the filter cloth. In order to prevent this, the present invention suggests having a volume inside the dip tube, that is large enough to compensate for the volume created between a fully inflated filter cloth and its support structure during backwash. In other words, the volume in the dip tube has to compensate the volume enlargement of the mentioned room caused by the backwash.

In prior art design, it is not possible to buffer the needed volume of filtrate for an efficient backwash in the filter candle

Another process of the procedure to remove the solids from the filter cloth involves a dry cake discharge and a cloth cleaning step wherein for the dry cake discharge pressurized gas is introduced from the suspension side to drive remaining fluid out of the filter vessel and the filter candle and to further dry the filter cake on the filter candle. Afterwards compressed gas is applied from the filtrate side in reversed flow direction into the filter candle elements. This will lead to a sudden movement of the filter cloth in form of an increase of the diameter of the same. This movement releases the filter cake from the filter cloth and enables the filter cake to fall down and exit the filter vessel through a bottom gate valve. Support bodies that defer from a round shape enhance the release of the filter cake from the filter cloth. This is caused by the movement of the filter cloth during being inflated.

One embodiment considering this is shown in patent US 4,473,472 where the shape of the filter cloth changes from a star-like shape during filtration, given by the support of six perforated tubes, to the round shape upon application of pressurized gas from the inside.

A second embodiment is described in patent US 4,968,424 where the filter candle has a cross section in the form of a cricket bat, which also determines the shape of the filter cloth during filtration and the starting point of the movement of the cloth before changing to the round shape forced by the application of pressurized gas from the inside.

US 2,742,158 A discloses a candle filter having a plurality of filter candles which are arranged on a common head plate in a vessel. The filter material used in US 2,742,158 A is a stiff wire screen. For cleaning the filter medium a vibrating device is mounted on the candle filter. Bars or rods supporting the wire screen are welded on a central dip tube.

US 2,057,814 A discloses a candle filter comprising an inner support body consisting of a tubular body and grooved elements, supporting a fabric covering. The tubular body consists of a cylindrical tube and a plurality of arcuate elements fixed on that tube by a plurality of nails. The fabric covering is drawn to a tight condition in contact with the outer faces of the ridges between the grooves. A filter cake will be blown from the outer face of the fabric covering by air under pressure.

WO00/16875 A2 discloses a candle filter with a support body disposed around a central dip tube, on which a filter cloth is stretched. The support body is perforated, i.e. by slits or holes, to allow the filtrate to enter the inner space of the support body. This construction is not efficient as its effective filter area is restricted to the slits or holes area.

DE 40 25 827 A1 discloses a filter candle having an outer filter cloth which is mounted over a support body and fixed to it by means of a tension belt. Sheet metal elements form flow channels or grooves. The device shall be used for the filtration of heating oil to protect the burner from particles present in the heating oil tank. Those particles are occurring mostly at the bottom of a heating oil tank. Therefore, the uppermost part of the device of DE 40 25 827 A1 is not covered by the filter cloth. Backwashing of this filter is not possible nor necessary.

All the systems, according to prior art, have a complex design of the support body, in order to form a pressure stable structure. These designs need a lot of labor force and material, in some cases very special precious and high-grade material for a good corrosion resistance, while nowadays it is crucial to safe valuable resources.

### SUMMARY OF THE INVENTION:

The problem addressed by the invention is that of providing a candle filter element which eliminates the disadvantages described, simplifying the design of such an element, reducing fabrication cost and improving the efficiency of cake discharge and backwash of particles from filter cloth.

It is an object of the present invention to provide a filter element comprising a support body and a filter cloth that is laid around the support body, wherein the support body comprises a centrally positioned dip channel and outer longitudinal flow channels.

The support body of the filter element according to the invention is formed of a continuous extruded profile, preferably comprising a thermoplastic material. Instead, the extruded profile may be made of another extruded material, e.g. a metal (like aluminum, steel, etc.) or glass. In principle, even a ceramic material may be suitable. The outer longitudinal flow channels are essentially completely open radially towards the outside of the filter element.

Preferably the outer contour of the support body of the filter element according to the invention may be circular, star-shaped, cricket bat-shaped or elliptical.

Preferably the filter element according to claim 1, wherein a central pipe forms the dip channel and longitudinal bars are mounted on that central pipe.

The outer longitudinal flow channels are formed by longitudinal walls within the material of the support body with rounded outer edges and are covered by the filter cloth.

Preferably the dip channel volume is at least equal to or larger than 1% larger than the total differential volume of all outer longitudinal flow channels of the same filter element, preferably between 1 % and 5% larger.

In a preferred embodiment of the invention the filter cloth is a hose-like filter cloth. Preferably it is fixed on the filter element by cloth-fixing elements, in particular by one cloth-fixing element at the bottom end of the longitudinal channel area and one cloth-fixing element at the top end of the longitudinal channel area of the candle filter element. In this embodiment of the present invention the cloth-fixing elements are also sealing the filtrate room against the feed room.

Preferably the filter element is further equipped with a coupling part between the support body and the fixing device and with a pin for an optimum alignment of the filter element in a filter device.

Preferably the filter cloth is fixed above the coupling part to cover the pin and the bottom part of the coupling part.

The thermoplastic material of the filter element according to the invention may be a compound material containing stability-enhancing additives such as carbon fibers or glass fibers.

It is another object of the present invention to provide a use of the filter element according to the invention in a filter device, wherein the filter device is a vessel wherein the unfiltered fluid is separated from the filtered fluid by a head plate.

In a preferred embodiment of the invention the filter elements in this filter device are mounted on one or more common filtrate headers as collector tubes.

In another preferred embodiment of the invention the filter element is used in a system where the filter elements are mounted on tube work headers (i.e. not within a closed filter vessel) and are instead submerged in the feed contained in an open basin and the differential pressure needed to drive filtration is created by vacuum inside such tube work headers.

### BRIEF DESCRIPTION OF THE DRAWINGS:

Fig. 1 shows longitudinal section of a candle filter element according to the invention
Fig. 2 shows a detail of the extruded support body with a filter cloth and a filter cake that includes the particles filtered from the feed suspension.
Fig. 3 shows a preferred design of a filter candle element for wet cake discharge according to the invention.
Fig. 4 shows the cross section of an alternative embodiment where the continuously extruded profile resembles a star shape.
Fig. 5 shows the cross section of an alternative embodiment where the continuously extruded profile resembles a cricket bat.
Fig. 6 shows the cross section of an alternative embodiment where the longitudinal bars are mounted on the main body.

### DETAILED DESCRIPTION:

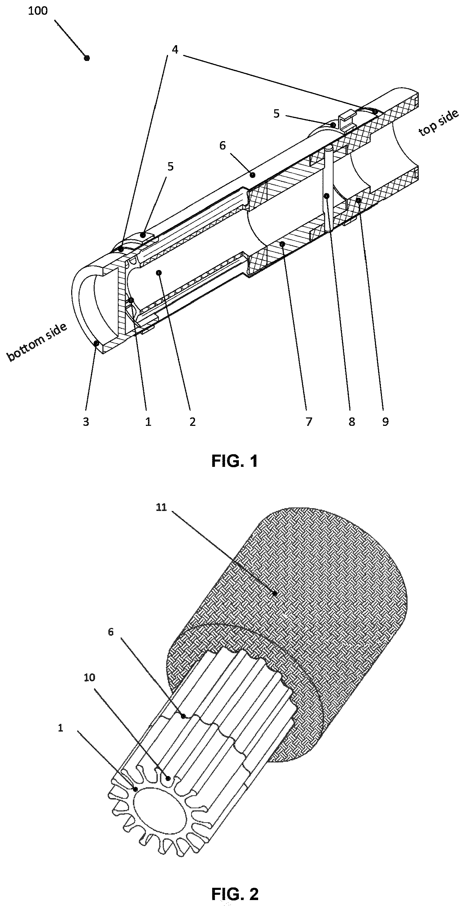

It is an object of the present invention to provide a filter element comprising a support body and a filter cloth that is laid around the support body, wherein the support body comprises a centrally positioned dip channel and outer longitudinal flow channels. The filter cloth may be wrapped around the support body. During operation of the filter element that filter cloth supports a filter cake when flowed through from the outside to the inside by a suspension. The dip channel may have a circular or a non-circular, e.g. square, hexagonal etc. cross-section. "Channels" in the context of the present invention shall mean longitudinal free spaces that are formed by the material of the support body, but shall explicitly exclude tubes like e.g. in Patent US 4,473,472 . The simplest embodiment of the dip channel may be a longitudinal free space of circular cross-section in the center of the profile. The outer longitudinal flow channels are essentially completely open radially towards the outside of the filter element - and not only perforated to a certain extent like in Patent US 4,473,472 -, as can be seen in Figures 2, 3, 4, 5 and 6. This feature of the flow channels provides for a lower resistance against the liquid flow or respective gas flow during filtration operation and backwashing and thereby results in a more efficient backwashing.

The support body of the filter element according to the invention is formed of a continuous extruded profile, preferably comprising a thermoplastic material. Instead, the extruded profile may be made of another extruded material, e.g. a metal (like aluminum, steel, etc.) or glass. In principle, even a ceramic material may be suitable.

"Continuous" in the context of the present invention means that the cross-section of the body is identical over the whole length of the support body. "Extruded" in the context of the present invention means that the support body over its whole length as well as all longitudinal bars are continuously formed in an extrusion process.

Continuous, extruded profiles generally have the advantage that they usually show no dead zones like edges, corners and the like, where filter fluid or particles could stay for long residence time and undergo changes like decomposition, ageing, bacterial growth etc. that could have negative effects.

However, for some applications where dead zones are less dangerous, also continuous profiles comprising a central tube that forms the dip channel and longitudinal bars mounted on that central tube by known methods (like welding, screwing, riveting, etc.) are suitable. Such bodies could for example be longitudinal finned tubes, like e.g. used for liquid-air heat exchangers.

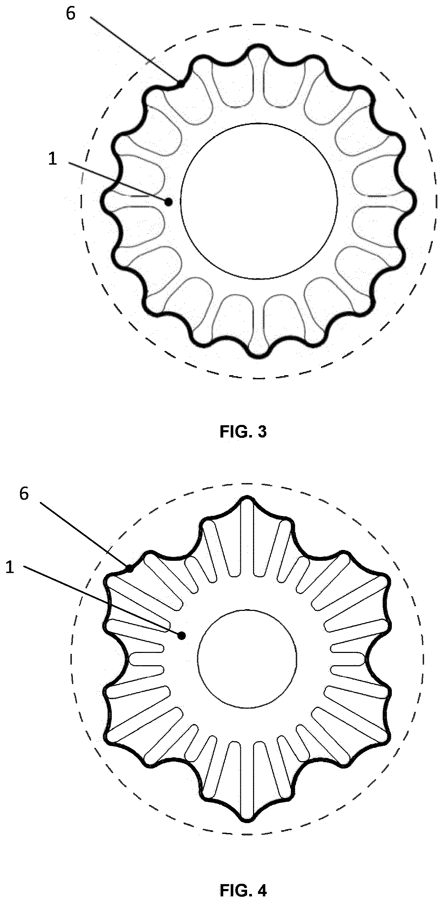

Preferably the outer contour of the support body of the filter element according to the invention may be circular, star-shaped, cricket bat-shaped or elliptical. "Elliptical" shall mean a rounded, non-edged, non-circular outer contour with two axes of symmetry showing a relation of the long and short axes of symmetry of the cross-section of the support body of between 1,1:1 and 20:1. A cricket bat shape will also be possible for the purposes of the present invention. Some suitable outer contour forms, i.e. profile shapes, can be derived from Figures 3 (round), 4 (star-shaped) and 5 (cricket bat-shaped).

The outer longitudinal flow channels are formed by longitudinal walls within the material of the support body with rounded outer edges and are covered by the filter cloth. During the filtration operation the filter cloth lays on these rounded outer edges and therefore is essentially supported by the longitudinal walls.

Preferably the dip channel volume is at least equal to or greater than 1%, larger than the total differential volume of all outer longitudinal flow channels of the same filter element, preferably between 1 % and 5% larger. The total differential volume shall mean the total volume (accessible for the filtrate) in the filter cloth in backwashing position minus the volume (accessible for the filtrate) of the channels covered by the filter cloth in the filtration position.

In a preferred embodiment of the invention the filter cloth is a substantially cylindrical filter cloth. Preferably it is fixed on the filter element by cloth-fixing elements, in particular by one cloth-fixing element at the bottom end of the longitudinal channel area and one cloth-fixing element at the top end of the longitudinal channel area of the candle filter element. In this embodiment of the present invention the cloth-fixing elements are also sealing the filtrate room against the feed room. Cloth-fixing elements may be e.g. clamps, tension rings or other suitable devices that are principally known to the skilled in the art.

Preferably the filter element is further equipped with a coupling part between the support body and the fixing device and with a pin for an optimum alignment of the filter element in a filter device.

Preferably the filter cloth is fixed above the coupling part to cover the pin and the bottom part of the coupling part, as can be seen in Fig. 1.

The thermoplastic material of the filter element according to the invention may be a compound material containing stability-enhancing additives such as carbon fibers or glass fibers. Such materials as well as the methods to shape them in an appropriate way are in principle known by the skilled in the art.

It is another object of the present invention to provide a use of the filter element according to the invention in a filter device, wherein the filter device is a vessel wherein the unfiltered fluid is separated from the filtered fluid by a head plate.

In a preferred embodiment of the invention the filter elements in this filter device are mounted on one or more common filtrate headers as collector tubes. Such filtrate headers are described e.g. in patent US 4,604,201 under the term "outlet channels".

In another preferred embodiment of the invention the filter element is used in a system configuration where the filter elements are mounted on tube work headers (i.e. not within a closed filter vessel) and are instead submerged in the feed contained in an open basin and the differential pressure needed to drive filtration is created by vacuum inside such tube work headers.

Fig. 1 shows the main parts of the candle filter element 100. The support body 1 includes an extrusion profile with integrated dip tube 2, a bottom part 3 for collecting the filtrate and redirecting the flow and a support area 4 for the clamp 5 to fasten the filter cloth 6, a coupling part 7 to connect the filter element via a pin 8 with the fixing device 9. On the fixing device 9, there is another support area 4 for the clamp 5 to fasten the filter cloth. One clamp on the bottom side and one on the top side of the filter element. On the top side, the filter element is equipped with a means to connect the same to the filtrate room.

According to the invention, unfiltered fluid passes the candle filter element from outside in. The fluid passes the filter cloth and a certain differential pressure is built from the outside to the inside. Driven by this differential pressure, the filter cloth 6 will lay down on the surface of the support body 1. This happens very evenly around the circumference. The particles of the unfiltered fluid separated on the surface of the filter cloth, build particle bridges and a filter cake 11 is thereby formed (see Fig. 2). The clean filtered fluid passes the filter cloth and is collected in the outer longitudinal flow channels 10 of the support body. These channels 10 are closed on the top side of the support body 1, so the filtered fluid is forced to flow downwards, to the bottom part 3, is redirected there to flow upwards through the dip tube 2 of the support body 1 and to exit the candle filter element at the top side. After finishing building up a filter cake 11, the filter candle will be cleaned where after filtration starts again. Cleaning can be done in two different ways. Depending whether the filter cake is desired to be discharged in a dry manner or whether a filter cake discharge as a slurry is desired for the process.

Backwash and cake discharge happens by reversing the flow of fluid by means of a pump or of introducing a gas from filtrate side. Cake discharge can be done in a dry manner, by firstly removing all the liquid from the system and dropping the filter cake through a bottom valve, or, in a slurry form by backwashing into the filled feed room and afterward draining the slurry from the same.

Fig. 3 shows a preferred design of a filter candle element for wet cake discharge according to the invention. The support body 1 for the filter cake including the outer flow channels for the filtrate and the dip tube are all made of one continuously extruded profile. Thus, the element only needs to be completed by top and bottom parts, preferably made of simple machined or injection molded parts and therefore the material used as well as the time needed to fabricate the element is kept at a minimum. The diameter of the dip tube is thereby designed to accommodate enough fluid to compensate for the volume change caused by the movement of the filter cloth during backwash.

Fig. 4 shows the cross section of an alternative embodiment where the continuously extruded profile resembles a star shape and thereby allows for a higher movement of the filter cloth when being inflated during the application of compressed gas from the inside thus having an improved filter cake release.

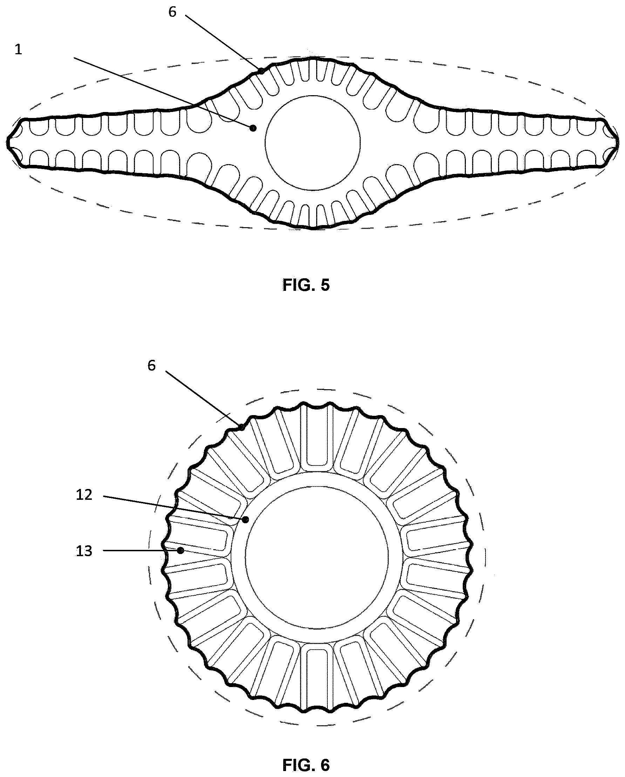

Fig. 5 shows the cross section of an alternative embodiment where the continuously extruded profile resembles a cricket bat that again allows for a high movement of the filter cloth when being inflated during the application of compressed gas from the inside. This embodiment has an additional advantage of allowing for accommodating a higher total volume of filter cake in a given vessel dimension.

Fig. 6 shows the cross section of an alternative embodiment where the longitudinal bars are mounted on the main body by welding (e.g. resistance welding) U-shaped metal profiles 13 onto a central tube 12.

## Claims

1. Filter element (100) comprising a support body (1) and a filter cloth (6) that is laid around the support body (1), wherein the support body (1) comprises a centrally positioned dip channel (2) and outer longitudinal flow channels (10), **characterized in that** the support body (1) is formed of a continuous extruded profile, even more preferably comprising a thermoplastic material, a ceramic material or a metal, that the outer longitudinal flow channels (10) are essentially completely open radially towards the outside of the filter element (100), that the filter cloth (6) can take a backwashing position and a filtration position being different from the backwashing position and that the outer longitudinal flow channels (10) are formed by longitudinal walls within the material of the support body (1) with rounded outer edges and covered by the filter cloth (6).

2. Filter element according to claim 1, wherein the outer contour of the support body (1) is circular, star-shaped, cricket bat-shaped or elliptical.

3. Filter element according to claim 1, wherein the dip channel volume is at least 1% larger than the total differential volume of all outer longitudinal flow channels (10).

4. Filter element according to claim 1, wherein the filter cloth (6) is fixed on the filter element (100) by cloth-fixing elements (5), in particular one cloth-fixing element (5) on the bottom end of the longitudinal channel area and one cloth-fixing element (5) on the top end of the longitudinal channel area of the candle filter element (100), wherein the cloth-fixing elements (5) are also sealing the filtrate room against the feed room.

5. Use of the filter element of claim 1 in a filter device, wherein the filter device is a vessel wherein the unfiltered fluid is separated from the filtered fluid by a head plate.

6. Use of the filter element of claim 1 in a filter device, wherein the filter elements are mounted on one or more common filtrate headers as collector tubes.

7. Use of the filter element of claim 1, wherein the filter element is used in a system configuration where the filter elements are mounted on tube headers and are submerged in the feed contained in an open basin and the differential pressure needed to drive filtration is created by vacuum inside such tube headers.

## Patentansprüche

1. Filterelement (100), umfassend einen Stützkörper (1) und ein Filtertuch (6), das um den Stützkörper (1) herumgelegt ist, wobei der Stützkörper (1) einen mittig angeordneten Tauchkanal (2) und äußere Längsströmungskanäle (10) umfasst, **dadurch gekennzeichnet, dass** der Stützkörper (1) aus einem kontinuierlichen Strangpressprofil gebildet ist, noch bevorzugter umfassend ein thermoplastisches Material, ein keramisches Material oder ein Metall, dass die äußeren Längsströmungskanäle (10) radial in Richtung der Außenseite des Filterelements (100) im Wesentlichen völlig offen sind, dass das Filtertuch (6) eine Rückspülstellung und eine Filtrationsstellung, die von der Rückspülstellung verschieden ist, einnehmen kann und dass die äußeren Längsströmungskanäle (10) durch Längswände innerhalb des Materials des Stützkörpers (1) mit gerundeten Außenkanten gebildet und durch das Filtertuch (6) abgedeckt sind.

2. Filterelement nach Anspruch 1, wobei die Außenkontur des Stützkörpers (1) kreisförmig, sternförmig, cricketschlägerförmig oder elliptisch ist.

3. Filterelement nach Anspruch 1, wobei das Tauchkanalvolumen um mindestens 1% größer als das gesamte Differenzvolumen aller äußeren Längsströmungskanäle (10) ist.

4. Filterelement nach Anspruch 1, wobei das Filtertuch (6) durch Tuchbefestigungselemente (5), insbesondere durch ein Tuchbefestigungselement (5) an dem unteren Ende des Längskanalbereichs und ein Tuchbefestigungselement (5) an dem oberen Ende des Längskanalbereichs des Kerzenfilterelements (100), an dem Filterelement (100) befestigt ist, wobei die Tuchbefestigungselemente (5) auch den Filtratraum gegenüber dem Zulaufraum abdichten.

5. Verwendung des Filterelements nach Anspruch 1 in einer Filtervorrichtung, wobei die Filtervorrichtung ein Gefäß ist, in dem das unfiltrierte Fluid mittels einer Kopfplatte von dem filtrierten Fluid getrennt ist.

6. Verwendung des Filterelements nach Anspruch 1 in einer Filtervorrichtung, wobei die Filterelemente an einem oder mehreren Registern als Filtratsammler angebracht sind.

7. Verwendung des Filterelements nach Anspruch 1, wobei das Filterelement in einer Systemkonfiguration verwendet wird, bei der die Filterelemente an Rohrsammlern angebracht sind und in den in einem offenen Becken enthaltenen Zulauf eingetaucht sind und der Differenzdruck, der benötigt wird, um die Filtration anzutreiben, durch Vakuum innerhalb derartiger Rohrsammler erzeugt wird.

## Revendications

1. Élément filtrant (100) comprenant un corps de support (1) et un tissu filtrant (6) disposé autour du corps de support (1), le corps de support (1) comprenant un canal de trempage (2) situé au centre et des canaux d'écoulement longitudinaux extérieurs (10), **caractérisé en ce que** le corps de support (1) est constitué d'un profilé extrudé continu, comprenant de préférence un matériau thermoplastique, un matériau céramique ou un métal, **en ce que** les canaux d'écoulement longitudinaux extérieurs (10) sont, pour l'essentiel, entièrement ouverts radialement vers l'extérieur de l'élément filtrant (100), **en ce que** le tissu filtrant (6) peut se mettre en position de rétrolavage et dans une position de filtration différente de la position de rétrolavage, et **en ce que** les canaux d'écoulement longitudinaux extérieurs (10) sont formés de parois longitudinales situées à l'intérieur du matériau du corps de support (1), aux arêtes extérieures arrondies et recouvertes par le tissu filtrant (6).

2. Élément filtrant selon la revendication 1, le contour extérieur du corps de support (1) étant circulaire, en forme d'étoile, en forme de batte de cricket ou elliptique.

3. Élément filtrant selon la revendication 1, le volume du canal de trempage étant d'au moins 1 % supérieur au volume différentiel total de tous les canaux d'écoulement longitudinaux extérieurs (10).

4. Élément filtrant selon la revendication 1, le tissu filtrant (6) étant fixé sur l'élément filtrant (100) par des éléments de fixation du tissu (5), en particulier par un élément de fixation du tissu (5) à l'extrémité inférieure de la section comportant les canaux longitudinaux et par un élément de fixation du tissu (5) à l'extrémité supérieure de la section comportant les canaux longitudinaux de l'élément filtrant à bougie (100), les éléments de fixation du tissu (5) assurant également l'étanchéité de la chambre de filtrat vis-à-vis de la chambre d'alimentation.

5. Utilisation de l'élément filtrant de la revendication 1 dans un dispositif de filtration, le dispositif de filtration étant un récipient dans lequel le fluide non filtré est séparé du fluide filtré par une plaque de recouvrement.

6. Utilisation de l'élément filtrant de la revendication 1 dans un dispositif de filtration, les éléments filtrants étant montés sur un ou plusieurs tubes collecteurs communs servant de collecteurs de filtrat.

7. Utilisation de l'élément filtrant de la revendication 1, l'élément filtrant étant utilisé dans une configuration système dans laquelle les éléments filtrants sont montés sur des collecteurs de tubes et immergés dans la suspension contenue dans un bassin ouvert, et dans laquelle la pression différentielle nécessaire au bon fonctionnement de la filtration est créée par le vide à l'intérieur de tels collecteurs de tubes.
